# FASCICULE DE BREVET EUROPEEN

(11) **EP 4 103 933 B1**
(45) Date de publication et mention de la délivrance du brevet: **04.06.2025**
(21) Numéro de dépôt: 21703468.5
(22) Date de dépôt: 09.02.2021
(51) Int. Cl.: G01N 21/88, G06T 7/00, G01N 21/958

(54) **METHODE DE MESURE DE LA GEOMETRIE D'UN VITRAGE**
VERFAHREN ZUM MESSEN DER GEOMETRIE EINER GLASPLATTE
METHOD FOR MEASURING THE GEOMETRY OF A GLASS PANEL

(30) Priorité: 10.02.2020 FR 2001283
(43) Date de publication de la demande: 21.12.2022
(73) Titulaire: Saint-Gobain Sekurit France, 60150 Thourotte (FR)
(72) Inventeur: WISS, Céline, 84510 CAUMONT SUR DURANCE (FR); LEPLAY, Paul, 84440 ROBION (FR); CARLU, Adrien, 80090 AVIGNON (FR); GLEIZE, Vincent Marc, 84000 AVIGNON (FR); FREMY, Flavien, BROOKLINE, MA 02446 (US)
(74) Mandataire: Saint-Gobain Recherche
(86) Numéro de dépôt international: PCT/EP2021/053101
(87) Numéro de publication internationale: WO 2021/160618

(56) Documents cités:
- CN-A- 107 564 091
- CN-A- 109 000 578
- US-A- 6 101 269
- US-A1- 2009 009 774
- SKYDAN O A ET AL: "3D shape measurement of automotive glass by using a fringe reflection technique", MEASUREMENT SCIENCE AND TECHNOLOGY, IOP, BRISTOL, GB, vol. 18, no. 1, 1 January 2007 (2007-01-01), pages 106 - 114, XP020118464, ISSN: 0957-0233, DOI: 10.1088/0957-0233/18/1/013
- B. BEAUBIER ET AL: "CAD-based calibration and shape measurement with stereoDIC : Principle and application on test and industrial parts", EXPERIMENTAL MECHANICS., vol. 54, no. 3, 25 September 2013 (2013-09-25), US, pages 329 - 341, XP055745376, ISSN: 0014-4851, DOI: 10.1007/s11340-013-9794-6
- CHARETTE P G ET AL: "Large deformation mechanical testing of biological membranes using speckle inerferometry in transmission. II: Finite element modeling", APPLIED OPTICS, OPTICAL SOCIETY OF AMERICA, WASHINGTON, DC, US, vol. 36, no. 10, 1 April 1997 (1997-04-01), pages 2246 - 2251, XP002261873, ISSN: 0003-6935, DOI: 10.1364/AO.36.002246
- MOHAGHEGHIAN I ET AL: "Deformation and damage mechanisms of laminated glass windows subjected to high velocity soft impact", INTERNATIONAL JOURNAL OF SOLIDS AND STRUCTURES, NEW YORK, NY, US, vol. 109, 4 January 2017 (2017-01-04), pages 46 - 62, XP029901404, ISSN: 0020-7683, DOI: 10.1016/J.IJSOLSTR.2017.01.006
- DUFOUR JOHN-ERIC ET AL: "CAD-based Displacement Measurements with Stereo-DIC", EXPERIMENTAL MECHANICS, SPRINGER NEW YORK LLC, US, vol. 55, no. 9, 10 July 2015 (2015-07-10), pages 1657 - 1668, XP035603232, ISSN: 0014-4851, [retrieved on 20150710], DOI: 10.1007/S11340-015-0065-6
- DUFOUR ET AL: "Chapter 43: Shape measurement using CAD-based stereo-DIC", 1 January 2014 (2014-01-01), XP009523817, ISSN: 2191-5644, ISBN: 978-1-4419-9716-6, Retrieved from the Internet <URL:http://link.springer.com/10.1007/978-3-319-00768-7_43> [retrieved on 20130801]

## Description

### Domaine technique

L'invention concerne une méthode de mesure de la géométrie tridimensionnelle d'un vitrage à base de verre minéral pendant ou juste après une opération de mise en forme en température. En particulier, elle permet la mesure de la géométrie tridimensionnelle du vitrage directement dans ou en sortie d'un four utilisé pour l'opération de mise en forme.

### Arrière-plan technique

Les systèmes intelligents d'assistance à la conduite (ADAS « advanced driver assistance system ») équipent de plus en plus de véhicules de transport, notamment de véhicules automobiles. Entre autres fonctionnalités, ces systèmes embarqués peuvent fournir en temps réel des informations sur l'état du trafic routier et/ou sur l'état des équipements et des éléments mécaniques et/ou électriques du véhicule, évaluer l'état de fatigue ou de distraction du conducteur, détecter et anticiper d'éventuelles menaces de l'environnement extérieur du véhicule, ou encore aider le conducteur à réaliser certaines manœuvres difficiles comme le dépassement d'autres véhicules ou le stationnement.

Pour fonctionner ces systèmes intègrent de nombreux dispositifs ou capteurs permettant de collecter des données sur le conducteur, le véhicule et/ou sur leur environnement. Certains systèmes, comme par exemple les systèmes d'aide au stationnement, les systèmes de conduite autonome ou encore les systèmes d'anticipation des collisions, mettent en œuvre un ou plusieurs dispositifs optiques d'acquisition d'images ou des dispositifs de mesure de l'environnement extérieur du véhicule. Ces dispositifs sont généralement disposés dans l'enceinte du véhicule, derrière l'un des vitrages dudit véhicule, ledit vitrage ayant alors généralement une fonction protectrice pour ce dispositif. Ils peuvent aussi être directement incorporés dans le vitrage, par exemple entre deux feuilles de verre d'un vitrage feuilleté dont l'une est munie d'une cavité pour l'accueillir.

Le vitrage peut être un des quelconques vitrages usuels du véhicule : parebrise, lunette arrière, vitrages latéraux. Le plus souvent les dispositifs optiques sont disposés derrière le parebrise afin d'acquérir des informations de l'avant du véhicule.

Afin que les systèmes intelligents embarqués qui mettent en œuvre des dispositifs optiques d'enregistrement ou des dispositifs de mesure disposés derrière les vitrages puissent fonctionner de manière optimale, il est nécessaire que les données acquises par lesdits dispositifs optiques soient fiables, notamment libres de tout artefact optique. Aussi, lesdits vitrages doivent-ils présenter une qualité optique suffisante afin d'éviter les défauts et/ou aberrations optiques comme des aberrations de sphéricité, de chromatisme, d'astigmatisme, de coma.

D'autre part, les vitrages de véhicule, en particulier les parebrises, peuvent également être utilisés comme des écrans de projection transparents afin de superposer un affichage d'informations, notamment d'informations provenant des systèmes intelligents embarqués, dans le champ de vision d'un opérateur sur un environnement qu'il observe au travers de ces écrans. Dans les véhicules, ces vitrages sont notamment connus sous la forme de collimateurs tête haute (HUD or Head-Up Display) qui permettent au conducteur de visualiser des informations cognitives telles que, par exemple, la vitesse du véhicule ou les directions d'un itinéraire à suivre, directement sur un parebrise, sans avoir à le quitter des yeux. Pour le confort du conducteur et afin d'éviter une superposition incongrue des informations cognitives avec l'environnement observé, il est nécessaire que leur affichage ne soit pas optiquement déformé, décalé ou dévié. Les vitrages doivent être dépourvus de défauts et/ou d'aberrations optiques susceptibles d'engendrer de tels défauts et/ou aberrations.

La fabrication des vitrages dans le domaine des moyens de transport comme les véhicules automobiles, en particulier les parebrises de véhicules automobiles, comprend généralement une étape de mise en forme de feuilles de verre minérale afin de leur conférer une certaine courbure. Cette courbure, dont les rayons de courbure peuvent varier tout le long de la surface de la feuille de verre, est nécessaire afin que le vitrage formé par les feuilles de verre soit apte à être fixé ou inséré sur ou dans l'armature du véhicule. Cela participe, entre autres, à l'esthétique générale recherchée par le constructeur de véhicule, aux performances mécaniques, thermiques et acoustiques des zones de fixation et d'insertion du vitrage dans l'armature ainsi qu'aux performances optiques du vitrage selon qu'il est utilisé comme parebrise ou vitrage latéral.

La courbure est conférée aux feuilles de verre du vitrage avant leur assemblage pour former le vitrage final. Il est connu d'utiliser des procédés de bombage permettant la mise en forme simultanée des feuilles de verre du vitrage car les feuilles de verre présentent ainsi exactement les mêmes courbures. Dans le cas des vitrages feuilleté pour parebrise, deux feuilles de verre sont posées l'une sur l'autre et sont supportées le long de leurs parties d'extrémités marginales d'une façon sensiblement horizontale par un cadre ou squelette ayant le profil définitif du vitrage après assemblage. Les deux feuilles de verre sont ensuite introduites dans un four de bombage, et l'opération de mise en forme est réalisée à une température dite de formage à laquelle le verre est apte à être déformé plastiquement. Pour les vitrages à base de verre minéral silico-sodo-calcique, la température de formage est généralement comprise entre 400°C et 650°C.

Des procédés de mise en forme similaires sont utilisés pour la mise en forme des autres vitrages usuels du véhicule : parebrise, lunette arrière, vitrages latéraux.

Il existe de nombreuses méthodes optiques qui permettent de mesurer la forme ou la géométrie tridimensionnelle d'un vitrage transparent à base d'un verre minéral. Dans ces méthodes, en raison de la transparence du vitrage, il est généralement nécessaire de rendre la surface du vitrage complètement opaque la surface du vitrage. Sans cette opacification, il est difficile de discerner le vitrage du reste de l'environnement à l'aide du dispositif optique.

En conséquence, la plupart de ces méthodes sont fondées sur la projection et l'observation d'une succession de motifs périodiques, notamment à l'aide de mires, telles que des franges ou des grilles, sur la surface du vitrage. Un traitement numérique des images permet ensuite de calculer les décalages de phase entre les motifs, ces décalages étant corrélés aux variations de courbure et de forme du vitrage.

Le document du SKYDAN O A ET AL: "3D shape measurement of automotive glass by using a fringe reflection technique",MEASUREMENT SCIENCE AND TECHNOLOGY, IOP, BRISTOL, GB, vol. 18, no. 1, 1 janvier 2007, pages 106-114 divulgue une méthode de détermination de la géométrie tridimensionnelle d'un vitrage par l'analyse d'une image d'un motif de franges réfléchi sur la surface dudit vitrage dans sa direction de réflexion spéculaire. Le document du B. Beaubier ET AL: "CAD-based calibration and shape measurement with stereoDIC : Principle and application on test and industrial parts",EXPERIMENTAL MECHANICS., vol. 54, no. 3, 25 septembre 2013, pages 329-341 concerne une méthode de mesure de la géométrie de pièces métalliques. Un motif aléatoire est déposé sur la surface de ces pièces par le dépôt d'une peinture formant un motif aléatoire. Le document CN 107 564 091 A décrit un système pour la reconstruction tridimensionnelle d'un objet. Le modèle numérique est obtenu à l'aide d'un algorithme de post-traitement de données extraites des deux images de l'objet à modéliser.

### Résumé de l'invention

### Problème technique

Les méthodes actuelles ne sont pas adaptées à une mesure sur des vitrages transparents dont la surface ne peut être opacifiée complétement. En outre, les températures à laquelle les vitrages sont mis en forme peut provoquer leur rayonnement, souvent intense, notamment dans ou en sortie du four utilisé dans le procédé de mise en forme. Il est particulièrement difficile de détecter des anomalies optiques lorsque les feuilles de verre rayonnent car, les dispositifs optiques étant partiellement ou totalement aveuglés par le rayonnement, les images ne présentent plus une qualité suffisante pour la mesure des décalages de phase entre des motifs périodiques.

Actuellement, les défauts et/ou aberrations optiques liés à la courbure ou la forme du vitrage ne sont donc généralement détectés que lors du contrôle de la qualité optique après que les feuilles de verre du vitrage aient refroidi. Pendant le temps de latence entre le moment où le défaut est généré et le moment où il est détecté, la production du verre n'est pas arrêtée, et le verre produit pendant cette période ne peut être ni vendu au client ni utilisé en raison de la présence des défauts et/ou aberrations. Il s'agit donc d'une double perte matérielle et financière pour le fabriquant. Il est donc souhaitable de détecter la présence des défauts et/ou aberration le plus tôt possible afin de pouvoir agir rapidement sur le procédé de mise en forme de manière à en supprimer la source et ainsi diminuer les pertes de verre.

### Solution au problème technique

La présente invention résout ces problèmes. Elle concerne une méthode, mise en œuvre par ordinateur, tel que décrite dans la revendication 1, les revendications dépendantes étant des modes de réalisation avantageux. Elle se rapporte également à un procédé de mesure de la géométrie tridimensionnelle d'un vitrage transparent à base de verre minéral tel que décrit dans la revendication 5, les revendications dépendantes étant des modes de réalisations avantageux. L'invention se rapporte également à un système, tel que décrit dans la revendication 17, un programme d'ordinateur, tel que décrit dans la revendication 3, et un support d'enregistrement déchiffrable par ordinateur, tel que décrit dans la revendication 4, pour la mise en oeuvre de ce procédé.

### Brève description des dessins

[Fig. 1] est une représentation sous forme de diagramme logique d'une méthode de détermination de la géométrie tridimensionnelle d'un vitrage conformément à l'invention
[Fig. 2] est une représentation schématique d'un mode de réalisation d'un procédé et d'un système mesure de la géométrie tridimensionnelle d'un vitrage conformément à l'invention.
[Fig. 3] est une représentation schématique d'un autre mode de réalisation d'un procédé et d'un système mesure de la géométrie tridimensionnelle d'un vitrage conformément à l'invention.

### Description détaillée de modes de réalisation

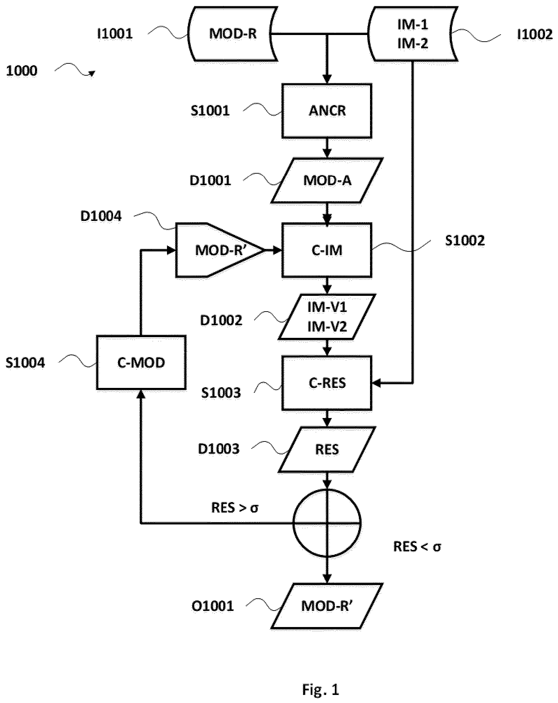

Comme illustré sur la figure 1, l'invention concerne une méthode 1000, mise en oeuvre par ordinateur, de détermination de la géométrie tridimensionnelle d'un vitrage transparent à base d'un verre minéral, ladite méthode utilisant en données d'entrée I1001 et I1002 :
- un modèle numérique de référence MOD-R de la géométrie tridimensionnelle du vitrage, et
- au moins deux images numériques IM-1 et IM-2 d'un motif lumineux aléatoire projeté sur la surface du vitrage, lesdites images représentant ledit motif selon deux angles d'observation différents par rapport à une normale à la surface du vitrage ;

ladite méthode fournissant, en donnée de sortie O1001, un modèle numérique MOD-R' de la géométrie tridimensionnelle dudit vitrage ;
ladite méthode comprenant :
   (a) une étape S1001 d'ancrage ANCR du modèle numérique de référence MOD-R sur l'une des images numériques IM-1 et IM-2 à l'aide d'au moins trois points d'ancrage (cette étape fournit en donnée de sortie D1001 un modèle numérique noté MOD-A qui est utilisé comme donnée d'entrée de l'étape S1002) ;
   (b) une étape S1002 de calcul, à partir du modèle numérique de référence MOD-R de deux images numériques virtuelles IM-V1 et IM-V2 du vitrage selon les deux mêmes angles d'observation que ceux des deux images numériques IM-1 et IM-2 fournies en données d'entrée I1002 (cette étape fournit en donnée de sortie D1002 deux images numériques virtuelles IM-V1 et IM-V2 qui sont utilisés comme donnée d'entrée de l'étape S1003) ;
   (c) une étape S1003 de calcul des résidus C-RES correspondant aux différences entre les images virtuelles obtenues à l'étape (b) et les images numériques IM-1 et IM-2 fournies en données d'entrée 11002 (cette étape fournit en donnée de sortie D1003 les résidus RES qui sont utilisés comme données d'entrée de l'étape S1004);
   (d) une étape d'itération S1004 des étapes (b) et (c), chaque itération comprenant une étape de calcul C-MOD d'un modèle numérique modifié MOD-R' à partir d'un modèle numérique modifié antérieur MOD-R', fourni en tant que donnée d'entrée D1004 à ladite étape (d), de manière à minimiser les valeurs des résidus RES jusqu'à ce qu'elles soient sous une valeur seuil σ préalablement définie (à chaque itération S1004 l'étape de calcul C-MOD fournit en donnée de sortie D1004 un modèle numérique qui est utilisé rétroactivement comme donnée d'entrée de l'étape S1002), le modèle numérique modifié MOD-R' correspondant alors à la donnée de sortie O1001.

Les étapes de calcul C-IM, C-RES et C-MOD de la méthode selon l'invention se fondent sur les principes mathématiques des méthodes de stéréo-corrélation d'images numériques. Ces méthodes permettent de déterminer les variations de forme d'un objet par calcul du déplacement de cet objet à partir d'un traitement d'images numériques de cet objet selon différents angles d'observation. Des exemples détaillés d'implémentation algorithmique des étapes (b) à (d) de la méthode selon l'invention sont décrits dans les articles de Dufour et al., Shape measurement using CAD-based stereo-DIC, Advancement of Optical Methods in Experimental Mechanics, 2014, 3:333-338, et Beaubier et al., CAD-based calibration and shape measurement with Stereo-DIC, Experimental Mechanics, 2014, 54[3]:329-341.

Il a été constaté de manière surprenante que la mise en œuvre de ces étapes sur des images numériques d'un motif lumineux aléatoire projeté sur la surface d'un vitrage transparent, lesdites images représentant ledit motif selon deux angles d'observation différents, permettait de déterminer la forme ou la géométrie tridimensionnelle d'un vitrage transparent dont la surface ne pas être totalement opacifiée et/ou qui rayonne sous l'effet de la température.

La méthode selon l'invention détermine directement la forme du vitrage à partir de la modélisation itérative d'images numériques virtuelles d'abord fondées sur un modèle numérique de référence puis comparées à des images numériques réelles du vitrage. Cela a pour avantage que la méthode selon l'invention permet de déterminer la forme ou géométrie tridimensionnelle du vitrage même si la surface du vitrage ne peut pas être complètement opacifiée.

Au contraire, les méthodes indirectes fondées sur le calcul de déphasage entre des motifs périodiques successifs nécessitent une opacification complète pour permettre une mesure de la forme complète du vitrage.

Aussi, dans la méthode selon l'invention, l'utilisation d'un motif lumineux aléatoire, qui permet à une opacification partielle de la surface est-elle suffisante pour permettre la détermination de la forme et géométrie tridimensionnelle d'un vitrage.

D'autre part, le motif lumineux aléatoire permet d'obtenir en une seule acquisition une image numérique qui fournit en elle-même une quantité importante d'information spectrale dans toutes les directions du plan de la surface du vitrage. Au contraire, les méthodes indirectes fondées sur l'utilisation de motifs périodiques, il faut autant d'images que de motifs car chaque motif ne permet d'obtenir qu'une seule information spectrale dans une seule direction. L'utilisation d'un seul motif suffit là où les méthodes indirectes requièrent l'utilisation d'une succession d'une pluralité de motifs périodiques. L'acquisition des images numériques à fournir comme données d'entrée à la méthode selon l'invention est donc simplifiée.

Pour ces raisons, la méthode selon l'invention est particulièrement efficace pour la détermination de la forme et géométrie tridimensionnelle d'un vitrage dont la surface ne peut pas être complètement opacifiée.

Un autre avantage est que la méthode selon l'invention ne requiert pas une qualité d'images numériques du motif aussi élevée que celle requise par les méthodes indirectes, puisqu'aucun calcul de décalage de phase n'est effectué. Ainsi, grâce notamment au motif lumineux aléatoire, les images numériques, lorsqu'elles sont utilisées conformément à l'invention, présentent une qualité suffisante pour déterminer la géométrie du vitrage, même si le rayonnement du vitrage sous l'effet de la température est susceptible d'aveugler partiellement le dispositif optique utilisé pour l'acquisition desdites images.

La valeur seuil σ préalablement définie dépend de la précision et de la vitesse de convergence recherchées pour l'obtention du modèle numérique modifié MOD-R' correspondant alors à la donnée de sortie O1001. Elle est définie selon la complexité de la forme ou de la géométrie tridimensionnelle du vitrage.

Dans un mode de réalisation de l'invention, le motif lumineux est formé de points lumineux répartis aléatoirement sur la surface du vitrage et présente une distribution aléatoire en taille et en densité lumineuse. Ce mode de réalisation est avantageux en ce qu'il permet à la fois une opacification partielle de la surface et l'obtention d'images numériques de la surface avec une qualité optimale pour l'exécution des étapes de calcul de la méthode selon l'invention. D'autre part, il peut facilement être mise en œuvre dans les procédés de bombage courants dans lesquels une matière pulvérulente est dispersée entre les surfaces de plusieurs feuilles de verre empilées et mises en forme simultanément.

La méthode selon l'invention a été développée dans le contexte d'une mesure de la forme ou de la géométrie tridimensionnelle de vitrages transparents dont la température provoque leur rayonnement. Cependant, elle convient également pour la mesure de la forme ou de la géométrie tridimensionnelle de tout vitrage transparent quelle que soit sa température, notamment aussi à tout vitrage transparent dont la température n'en provoque pas le rayonnement.

Le modèle numérique de référence de la géométrie tridimensionnelle du vitrage utilisé en données d'entrée, est un modèle virtuel tridimensionnel du vitrage présentant la forme ou la géométrie spatiale recherchée pour ce vitrage lors de sa mise en forme. Ce modèle est modèle tridimensionnel. Il peut être notamment un modèle établi dans le cadre d'une conception assistée par ordinateur (CAO).

Dans l'étape (a) d'ancrage du modèle numérique de référence sur l'une des images numériques à l'aide d'au moins trois points d'ancrage, il s'agit de faire coïncider manuellement ou automatiquement des points spatiaux ou des zones spatiales du vitrage du modèle numérique de référence avec des points spatiaux ou des zones spatiales correspondants du vitrage de ladite image numérique. Cette étape a une fonction de calibration par la fixation des contraintes de géométrique permettant la convergence de la méthode vers un résultat de précision satisfaisante.

Les points spatiaux ou zones spatiales de correspondance peuvent avantageusement être des invariants géométriques qui sont peu ou non susceptibles d'être affectés par une variation de la géométrie ou de la forme du vitrage. Ces invariants peuvent par exemple être des bords, des coins ou des angles du vitrage.

Selon l'invention, l'ancrage de l'étape (a) est réalisé à l'aide de trois points d'ancrage. Trois points d'ancrage sont généralement suffisants pour obtenir une convergence cohérente et une précision satisfaisante de la méthode. Si le vitrage présente une forme ou une géométrie originale ou particulière, ou si une meilleure convergence et/ou précision est recherchée, le nombre de points d'ancrage peut être plus élevé. En particulier, il peut être de quatre, de cinq voire six.

La méthode selon l'invention utilise en données d'entrée au moins deux images numériques d'un motif lumineux aléatoire projeté sur la surface du vitrage, lesdites images représentant ledit motif selon deux angles d'observation différents. Autrement dit, la méthode selon l'invention peut être mise en œuvre immédiatement ou ultérieurement sur les images après leur acquisition, indépendamment du ou des dispositifs optiques numériques utilisés pour les acquérir. Cela a notamment pour avantage de permettre une mise en œuvre centralisée de la méthode sur un système informatique central auquel sont reliées plusieurs lignes de production dans lesquelles des dispositifs optiques numériques adaptés à l'acquisition de telles images sont prévus. En particulier, la méthode peut être adaptée pour l'infonuage (« cloud computing »).

A cet effet, l'invention a également pour objet un programme d'ordinateur comprenant des instructions qui, lorsque le programme est exécuté par un ordinateur, conduisent celui-ci à mettre en œuvre les étapes de la méthode de l'invention. Tout type de langage de programmation compilé vers une forme binaire ou directement interprété peut être utilisé pour implémenter les étapes du procédé par une suite d'instructions arithmétiques ou logiques exécutables par un ordinateur ou tout système de traitement de l'information programmable. Le programme informatique peut faire partie d'un logiciel, c'est-à-dire d'un ensemble d'instructions exécutables et/ou d'un ou plusieurs jeux de données ou de bases de données.

Tout ou partie du programme informatique peut être stocké sur un support d'enregistrement déchiffrable par ordinateur. L'invention a également trait à un support de stockage déchiffrable par ordinateur comprenant des instructions qui, lorsqu'elles sont exécutées par un ordinateur, conduisent celui-ci à mettre en œuvre les étapes de la méthode de l'invention. De préférence, ce support de stockage est une mémoire informatique non volatile ou rémanente, par exemple une mémoire de masse magnétique ou à semi-conducteur (solid state drive, flash memory). Il peut être amovible ou intégré à l'ordinateur qui en déchiffre le contenu et en exécute les instructions.

Le support de stockage peut aussi être intégré à un ordinateur, appelé « serveur », différent de celui qui exécute les instructions, appelé le « client ». Pour exécuter les instructions contenues dans le support de stockage, l'ordinateur « client » peut accéder à l'espace mémoire de l'ordinateur « serveur » par un moyen de télécommunication physique et/ou aérien adapté. L'ordinateur « serveur » peut aussi déchiffrer le support de stockage sur lequel est stocké le programme d'ordinateur et communiquer les instructions sous forme binaire à l'ordinateur « client » par tout moyen de télécommunication.

**Il** peut aussi être avantageux que le support de stockage soit un support amovible ou accessible à distance par un moyen de télécommunication de manière à faciliter sa diffusion dans tous les lieux où la méthode de l'invention est susceptible d'être utilisée.

Le programme d'ordinateur et/ou le support de stockage selon l'invention peuvent être avantageusement faire partie ou mis en œuvre dans une architecture mettant à disposition des ressources informatiques à la demande, telle qu'un infonuage (« cloud computing »). Un telle permet de centraliser le déploiement, la mise à jour et l'allocation des ressources informatiques dans tous les lieux où la méthode de l'invention est susceptible d'être utilisée. La diffusion et l'utilisation sont ainsi facilitées.

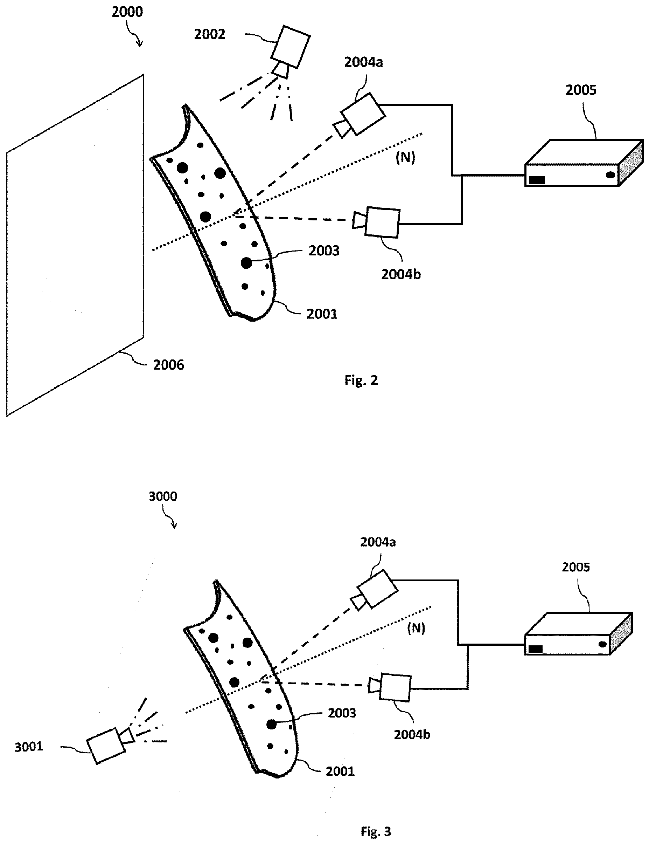

Comme illustré sur les figure 2 et 3, la présente invention a également pour objet un procédé 2000, 3000 de mesure de la géométrie tridimensionnelle d'un vitrage 2001 transparent à base de verre minéral, ledit procédé comprenant les étapes suivantes :
(a) la projection 2002, 3001 d'un motif lumineux aléatoire 2003 sur la surface du vitrage 2001 ;
(b) l'acquisition simultanée et indépendante d'au moins deux images numériques IM-1, IM-2 dudit motif 2003 par deux dispositifs optiques numériques 2004a, 2004b orientés selon deux angles d'acquisition différents par rapport à une normale (N) du vitrage 2001 ;
(c) la détermination de la géométrie tridimensionnelle du vitrage 2001 à l'aide d'une méthode, mise en œuvre par ordinateur 2005, de détermination de la géométrie tridimensionnelle d'un vitrage 2001 transparent à base d'un verre minéral telle que décrite précédemment et dans laquelle les images numériques IM-1, IM-2 acquises à l'étape (b) sont fournies en données d'entrée 11001, 11002.

L'étape (a) de projection 2002, 3001 du motif lumineux aléatoire 2003 sur la surface du vitrage 2001 peut être réalisée à l'aide de tout dispositif de projection adapté. La projection peut être réalisé en réflexion 2002 ou en transmission 3001.

Le motif lumineux aléatoire 2003 peut être avantageusement formé de points lumineux répartis aléatoirement sur la surface du vitrage 2001 et présenter une distribution aléatoire en taille et en densité lumineuse. Ce mode de réalisation est avantageux en ce qu'il permet à la fois une opacification partielle de la surface et l'obtention d'images numériques de la surface de qualité optimale pour l'exécution des étapes de calcul de la méthode selon l'invention.

Le procédé de mesure selon l'invention est avantageux en ce qu'il permet de déterminer la forme ou la géométrie tridimensionnelle d'un vitrage transparent qui rayonne sous l'effet de la température. Il convient notamment pour un vitrage dont la température est telle que la longueur d'onde correspondant au maximum de sa radiance est comprise entre 2 µm et 6 µm.

En particulier, il convient aux vitrages dans le domaine automobile, tels que parebrises ou lunettes latérales ou arrières. Ces vitrages sont à base de verre minéral silico-sodo-calcique, lors de leur mis en forme, la température du vitrage est comprise entre 300°C et 1000°C, en particulier entre 400°C et 650°C, selon la composition du verre.

La température du vitrage ou du four dans lequel il est mis en forme peut être telle que l'atmosphère ambiante est animée de mouvements de convection. Dans certains cas, ces mouvements de convection sont susceptibles d'altérer l'acquisition des images numériques du motif lumineux. En particulier, la qualité des images numérique peut être dégradée par l'apparition d'artefacts de mouvement du motif.

Les dispositifs optiques numériques 2004a, 2004b peuvent être alors avantageusement munis de filtres à densité neutre, la densité étant comprise entre 2 et 400, de préférence entre 8 et 64. Ces filtres permettent de réduire l'effet des mouvements de convection de l'atmosphère ambiante sur la qualité des images numériques acquises par les dispositifs optiques numérique. Par filtre à densité neutre, il est entendu un filtre optique qui absorbe de manière uniforme les rayonnements électromagnétiques d'un spectre électromagnétique, notamment le spectre visible, quelle que soit la longueur d'onde des rayonnements de ce spectre.

Selon la composition du verre minéral formant le vitrage, la température du vitrage peut également être telle que l'intensité de son rayonnement, notamment dans le spectre visible, peut provoquer la saturation des composants électroniques photosensibles des dispositifs optiques numériques. Par exemple, pour les vitrages à base de verre minéral silico-sodo-calcique, la saturation peut apparaître lorsque leur température est aux alentours de 700-800°C. La projection 2002, 3001 du motif lumineux aléatoire 2003 et l'acquisition des images peuvent être alors avantageusement réalisés dans un domaine de longueurs d'onde du spectre électromagnétique compris entre 435 nm et 530 nm, en particulier entre 465 nm et 490 nm. Le rayonnement d'un vitrage à base de verre minéral est généralement réduit dans ce domaine du spectre électromagnétique.

Afin de former un motif lumineux aléatoire, le procédé selon l'invention peut avantageusement comprendre avant l'étape (a), une étape de dispersion d'une matière pulvérulente, et la projection 2002, 3001 du motif lumineux aléatoire 2003 à l'étape (a) peut être réalisée par un éclairage en lumière visible d'une matière pulvérulente dispersée sur la surface du vitrage. Ce mode de réalisation peut notamment être mise en œuvre dans les procédés de bombage courants dans lesquels une matière pulvérulente, également appelée poudre intercalaire, est dispersée entre les surfaces de plusieurs feuilles de verre empilées et mises en forme simultanément. Cette poudre intercalaire est généralement à base de carbonates de magnésium et/ou calcium.

L'éclairage de la matière pulvérulente peut être réalisée de deux façons différentes, en transmission ou en en réflexion selon un angle de projection compris entre 35° et 55°, en particulier entre 40° et 50°, de préférence avec un angle de projection de 45° par rapport à une normale à la surface du vitrage. Un éclairage en en réflexion selon un angle de projection compris entre 35° et 55°, en particulier entre 40° et 50°, de préférence avec un angle de projection de 45°, peut être préféré en ce qu'il permet de limiter la réflexion spéculaire vers les dispositifs optiques numériques pour l'acquisition des images numériques du motif lumineux aléatoire.

Lorsque, selon la composition du verre minéral formant le vitrage, la température du vitrage est telle que l'intensité de son rayonnement, notamment dans le spectre visible, peut provoquer la saturation des composants électroniques photosensibles des dispositifs optiques numériques, l'éclairage peut être avantageusement réalisé dans un domaine de longueurs d'onde du spectre électromagnétique compris entre 435 nm et 530 nm.

Dans un mode de réalisation du procédé de l'invention, un arrière-plan absorbant 2006 du spectre visible peut être avantageusement placé derrière le vitrage du côté opposé à celui de dispositifs optiques numériques. L'arrière-plan absorbant permet d'améliorer le contraste entre le motif lumineux aléatoire projeté sur la surface du vitrage et l'environnement du vitrage. La qualité des images numériques acquises peut être ainsi améliorée.

Le procédé selon l'invention est avantageux pour déterminer la géométrie tridimensionnelle d'un vitrage transparent à base de verre minéral. Il est notamment adapté pour la mesure de la géométrie tridimensionnelle d'un vitrage bombé ou incurvé. Ce type de forme est très utilisé pour les vitrages du domaine automobile, notamment pour les parebrises.

Un système 2000, 3000 pour la mise en œuvre d'un procédé de mesure conformément à l'invention peut comprendre :
- un projecteur 2002, 3002 configuré pour projeter un motif lumineux aléatoire 2003 sur un vitrage 2001 à base de verre minéral transparent ;
- aux moins deux dispositifs optiques numériques 2004a, 2004b orientés selon deux angles d'acquisition différents par rapport à une normale (N) à la surface du vitrage, configurés pour l'acquisition simultanée et indépendante d'au moins deux images numériques IM-1, IM-2 du motif lumineux aléatoire 2003 ;
- une unité de traitement 2005 de données pour la détermination de la géométrie tridimensionnelle d'un vitrage 2001 à base d'un verre minéral transparent, ladite unité de traitement 2005 utilisant, en données d'entrée I1001 et 11102 , un modèle numérique de référence MOD-R de la géométrie tridimensionnelle du vitrage, et les images numériques IM-1 et IM-2 acquises par les dispositifs optiques numériques 2004a, 2004b, et fournissant, en donnée de sortie O1001, un modèle numérique MOD-R' de la géométrie tridimensionnelle du vitrage 2001 ;
ladite unité de traitement de données comprenant des moyens pour la mise en œuvre d'une méthode 1000 comprenant des étapes suivantes :
(a) une étape S1001 d'ancrage ANCR du modèle numérique de référence MOD-R sur l'une des images numériques IM-1 et IM-2 à l'aide d'au moins trois points d'ancrage (cette étape fournit en donnée de sortie D1001 un modèle numérique noté MOD-A qui utilisé comme donnée d'entrée de l'étape S1002) ;
(b) une étape S1002 de calcul, à partir du modèle numérique de référence MOD-R de deux images numériques virtuelles IM-V1 et IM-V2 du vitrage selon les deux mêmes angles d'observation que ceux des deux images numériques IM-1 et IM-2 fournies en données d'entrée 11002 (cette étape fournit en donnée de sortie D1002 deux images numériques virtuelles IM-V1 et IM-V2 qui sont utilisés comme donnée d'entrée de l'étape S1003) ;
(c) une étape (S1003) de calcul des résidus (C-RES) correspondant aux différences entre les images virtuelles obtenues à l'étape (b) et les images numériques (IM-1, IM-2) fournies en données d'entrée (I1002) (cette étape fournit en donnée de sortie D1003 les résidus RES qui sont utilisés comme données d'entrée de l'étape S1004);
(d) une étape d'itération S1004 des étapes (b) et (c), chaque itération comprenant une étape de calcul C-MOD d'un modèle numérique modifié MOD-R' à partir d'un modèle numérique modifié antérieur MOD-R', fourni en tant que donnée d'entrée D1004 à ladite étape (d), de manière à minimiser les valeurs des résidus RES jusqu'à ce qu'elles soient sous une valeur seuil σ préalablement définie (à chaque itération S1004 l'étape de calcul C-MOD fournit en donnée de sortie D1004 un modèle numérique qui est utilisé rétroactivement comme donnée d'entrée de l'étape S1002), le modèle numérique modifié MOD-R' correspondant alors à la donnée de sortie O1001.

## Revendications

1. Méthode (1000), mise en œuvre par ordinateur, de détermination de la géométrie tridimensionnelle d'un vitrage transparent à base d'un verre minéral, ladite méthode utilisant en données d'entrée (I1001, I1002) :
- un modèle numérique de référence (MOD-R) de la géométrie tridimensionnelle du vitrage, et
- au moins deux images numériques (IM-1, IM-2) d'un motif lumineux aléatoire projeté sur la surface du vitrage, lesdites images représentant ledit motif selon deux angles d'observation différents par rapport à une normale à la surface du vitrage ;
ladite méthode fournissant, en donnée de sortie (O1001), un modèle numérique (MOD-R') de la géométrie tridimensionnelle dudit vitrage ;
ladite méthode comprenant :
(a) une étape (S1001) d'ancrage (ANCR) du modèle numérique de référence (MOD-R) sur l'une des images numériques (IM-1, IM-2) à l'aide d'au moins trois points d'ancrage ;
(b) une étape (S1002) de calcul, à partir du modèle numérique de référence (MOD-R) de deux images numériques virtuelles (IM-V1, IM-V2) du vitrage selon les deux mêmes angles d'observation que ceux des deux images numériques (IM-1, IM-2) fournies en données d'entrée (I1002) ;
(c) une étape (S1003) de calcul des résidus (C-RES) correspondant aux différences entre les images virtuelles obtenues à l'étape (b) et les images numériques (IM-1, IM-2) fournies en données d'entrée (I1002) ;
(d) une étape d'itération (S1004) des étapes (b) et (c), chaque itération comprenant une étape de calcul (C-MOD) d'un modèle numérique modifié (MOD-R') à partir d'un modèle numérique modifié antérieur (MOD-R'), fourni en tant que donnée d'entrée (D1004) à ladite étape (d), de manière à minimiser les valeurs des résidus (RES) jusqu'à ce qu'elles soient sous une valeur seuil σ préalablement définie, le modèle numérique modifié (MOD-R') correspondant alors à la donnée de sortie (O1001) .

2. Méthode selon la revendication 1, tel que le motif lumineux (2003) est formé de points lumineux répartis aléatoirement sur la surface du vitrage (2001) et présente une distribution aléatoire en taille et en densité lumineuse.

3. Programme d'ordinateur comprenant des instructions qui, lorsque le programme est exécuté par un ordinateur, conduisent celui-ci à mettre en œuvre les étapes de la méthode selon l'une quelconque des revendications 1 à 2.

4. Support d'enregistrement déchiffrable par ordinateur comprenant des instructions qui, lorsqu'elles sont exécutées par un ordinateur, conduisent celui-ci à mettre en œuvre les étapes de la méthode selon l'une quelconque des revendications 1 à 2.

5. Procédé (2000, 3000) de mesure de la géométrie tridimensionnelle d'un vitrage (2001) transparent à base de verre minéral, ledit procédé comprenant les étapes suivantes :
(a) la projection (2002, 3001) d'un motif lumineux aléatoire (2003) sur la surface du vitrage (2001) ;
(b) l'acquisition simultanée et indépendante d'au moins deux images (IM-1, IM-2) numériques dudit motif (2003) par deux dispositifs optiques numériques (2004a, 2004b) orientés selon deux angles d'acquisition différents par rapport à une normale (N) du vitrage (2001) ;
(c) la détermination de la géométrie tridimensionnelle du vitrage (2001) à l'aide d'une méthode, mise en œuvre par ordinateur (2005), de détermination de la géométrie tridimensionnelle d'un vitrage (2001) transparent à base d'un verre minéral selon l'une quelconque des revendications 1 à 2, et dans laquelle les images numériques acquises (IM-1, IM-2) à l'étape (b) sont fournies en données d'entrée (I1001, 11002).

6. Procédé selon la revendication 5, tel que le motif lumineux (2003) est formé de points lumineux répartis aléatoirement sur la surface du vitrage (2001) et présente une distribution aléatoire en taille et en densité lumineuse.

7. Procédé selon l'une quelconque des revendications 5 à 6, tel que le vitrage (2001) a une température telle que la longueur d'onde correspondant au maximum de sa radiance est comprise entre 2 µm et 6 µm.

8. Procédé selon la revendication 7, tel que le vitrage (2001) est à base de verre minéral silico-sodocalcique et la température du vitrage est comprise entre 300°C et 1000°C, en particulier entre 400°C et 650°C.

9. Procédé selon l'une quelconque des revendications 5 à 8, tel que les dispositifs optiques numériques (2004a, 2004b) sont munis de filtres à densité neutre, la densité étant comprise entre 2 et 400, de préférence entre 8 et 64.

10. Procédé selon l'une quelconque des revendications 5 à 9, tel que la projection (2002, 3001) du motif lumineux (2003) et l'acquisition des images sont réalisés dans un domaine de longueurs d'onde du spectre électromagnétique compris entre 435 nm et 530 nm, en particulier entre 465 nm et 490 nm.

11. Procédé selon l'une quelconque des revendications 5 à 10, tel qu'il comprend en outre, avant l'étape (a), une étape de dispersion d'une matière pulvérulente, et la projection (2002, 3001) du motif lumineux aléatoire (2003) à l'étape (a) est réalisée par un éclairage en lumière visible d'une matière pulvérulente dispersée sur la surface du vitrage.

12. Procédé selon la revendication 11, tel que l'éclairage est réalisé en transmission.

13. Procédé selon la revendication 11, tel que l'éclairage est réalisé en réflexion selon un angle de projection compris entre 35° et 55°, en particulier entre 40° et 50°, de préférence avec un angle de projection de 45°, par rapport à une normale à une surface du vitrage.

14. Procédé selon l'un quelconque des revendications 5 à 8, tel que l'éclairage est réalisé dans un domaine de longueurs d'onde du spectre électromagnétique compris entre 435 nm et 530 nm.

15. Procédé selon l'une quelconque des revendications 5 à 14, tel qu'un arrière-plan absorbant (2006) du spectre visible est placé derrière le vitrage du côté opposé à celui de dispositifs optiques numériques.

16. Procédé selon l'une quelconque des revendications 5 à 15, tel que le vitrage est un vitrage incurvé.

17. Système (2000,3000) pour la mise en œuvre d'un procédé selon l'une quelconque des revendications 5 à 16, ledit système comprenant :
- un projecteur (2002, 3002) configuré pour projeter un motif lumineux aléatoire (2003) sur un vitrage (2001) à base de verre minéral transparent ;
- aux moins deux dispositifs optiques numériques (2004a, 2004b) orientés selon deux angles d'acquisition différents par rapport à une normale (N) à la surface du vitrage, configurés pour l'acquisition simultanée et indépendante d'au moins deux images numériques (IM-1, IM-2) du motif lumineux aléatoire (2003) ;
- une unité de traitement 2005 de données pour la détermination de la géométrie tridimensionnelle d'un vitrage (2001) à base d'un verre minéral transparent, ladite unité de traitement (2005) utilisant, en données d'entrée (I1001, 11102), un modèle numérique de référence (MOD-R) de la géométrie tridimensionnelle du vitrage, et les images numériques (IM-1, IM-2) acquises par les dispositifs optiques numériques (2004a, 2004b), et fournissant, en donnée de sortie (O1001), un modèle numérique (MOD-R') de la géométrie tridimensionnelle du vitrage (2001) ;
ladite unité de traitement de données comprenant des moyens pour la mise en œuvre d'une méthode (1000) comprenant des étapes suivantes :
(a) une étape (S1001) d'ancrage (ANCR) du modèle numérique de référence MOD-R sur l'une des images numériques (IM-1, IM-2) à l'aide d'au moins trois points d'ancrage;
(b) une étape (S1002) de calcul, à partir du modèle numérique de référence MOD-R de deux images numériques virtuelles (IM-V1, IM-V2) du vitrage selon les deux mêmes angles d'observation que ceux des deux images numériques (IM-1, IM-2) fournies en données d'entrée (I1002) ;
(c) une étape (S1003) de calcul des résidus (C-RES) correspondant aux différences entre les images virtuelles obtenues à l'étape (b) et les images numériques (IM-1, IM-2) fournies en données d'entrée (I1002) ;
(d) une étape d'itération (S1004) des étapes (b) et (c), chaque itération comprenant une étape de calcul (C-MOD) d'un modèle numérique modifié (MOD-R') à partir d'un modèle numérique modifié antérieur (MOD-R'), fourni en tant que donnée d'entrée (D1004) à ladite étape (d), de manière à minimiser les valeurs des résidus (RES) jusqu'à ce qu'elles soient sous une valeur seuil σ préalablement définie, le modèle numérique modifié (MOD-R') correspondant alors à la donnée de sortie (O1001).

## Patentansprüche

1. Computerimplementiertes Verfahren (1000) zur Bestimmung der dreidimensionalen Geometrie einer transparenten Verglasung auf Mineralglasbasis, wobei das Verfahren als Eingabedaten (I1001, I1002) verwendet:
- ein digitales Referenzmodell (MOD-R) der dreidimensionalen Geometrie der Verglasung, und
- mindestens zwei digitale Bilder (IM-1, IM-2) eines zufälligen Lichtmusters, das auf die Oberfläche der Verglasung projiziert wird, wobei die Bilder das Muster entsprechend zwei verschiedenen Beobachtungswinkeln relativ zu einer Normalen auf der Oberfläche der Verglasung darstellen;
wobei das Verfahren als Ausgabedaten (O1001) ein digitales Modell (MOD-R') der dreidimensionalen Geometrie der Verglasung bereitstellt; wobei das Verfahren umfasst:
(a) einen Schritt (S1001) des Verankerns (ANCR) des digitalen Referenzmodells (MOD-R) auf einem der digitalen Bilder (IM-1, IM-2) unter Verwendung von mindestens drei Ankerpunkten;
(b) einen Schritt (S1002) des Berechnens zweier virtueller digitaler Bilder (IM-V1, IM-V2) der Verglasung aus dem digitalen Referenzmodell (MOD-R) entsprechend den gleichen zwei Beobachtungswinkeln wie denen der beiden digitalen Bilder (IM-1, IM-2), die als Eingabedaten (I1002) bereitgestellt werden;
(c) einen Schritt (S1003) des Berechnens der Residuen (C-RES), die den Unterschieden zwischen den in Schritt (b) erhaltenen virtuellen Bildern und den als Eingabedaten (I1002) bereitgestellten digitalen Bildern (IM-1, IM-2) entsprechen;
(d) einen Iterationsschritt (S1004) der Schritte (b) und (c), wobei jede Iteration einen Berechnungsschritt (C-MOD) eines modifizierten digitalen Modells (MOD-R') aus einem vorherigen modifizierten digitalen Modell (MOD-R') umfasst, das als Eingabedaten (D1004) für den Schritt (d) bereitgestellt wurde, um die Werte der Residuen (RES) zu minimieren, bis sie unter einem zuvor definierten Schwellenwert a liegen, wobei das modifizierte digitale Modell (MOD-R') dann den Ausgabedaten (O1001) entspricht.

2. Verfahren nach Anspruch 1, wobei das Lichtmuster (2003) aus zufällig auf der Oberfläche der Verglasung (2001) verteilten Lichtpunkten gebildet ist und eine zufällige Verteilung in Größe und Lichtdichte aufweist.

3. Computerprogramm, umfassend Anweisungen, die, wenn das Programm durch einen Computer ausgeführt wird, diesen veranlassen, die Verfahrensschritte nach einem der vorstehenden Ansprüche 1 bis 2 zu implementieren.

4. Computerentschlüsselbares Aufzeichnungsmedium, das Anweisungen umfasst, die, wenn sie von einem Computer ausgeführt werden, den Computer veranlassen, die Verfahrensschritte nach einem der vorstehenden Ansprüche 1 bis 2 zu implementieren.

5. Verfahren (2000, 3000) zum Messen der dreidimensionalen Geometrie einer transparenten Verglasung (2001) auf Mineralglasbasis, wobei das Verfahren die folgenden Schritte umfasst:
(a) Projizieren (2002, 3001) eines zufälligen Lichtmusters (2003) auf die Oberfläche der Verglasung (2001);
(b) gleichzeitiges und unabhängiges Erfassen von mindestens zwei digitalen Bildern (IM-1, IM-2) des Musters (2003) durch zwei digitale optische Vorrichtungen (2004a, 2004b), die entsprechend zwei verschiedenen Erfassungswinkeln relativ zu einer Normalen (N) der Verglasung (2001) ausgerichtet sind;
(c) Bestimmen der dreidimensionalen Geometrie der Verglasung (2001) unter Verwendung eines computerimplementierten Verfahrens (2005) zum Bestimmen der dreidimensionalen Geometrie einer transparenten Verglasung (2001) auf Mineralglasbasis nach einem der Ansprüche 1 bis 2, und wobei die in Schritt (b) erfassten digitalen Bilder (IM-1, IM-2) als Eingabedaten (I1001, I1002) bereitgestellt werden.

6. Verfahren nach Anspruch 5, wobei das Lichtmuster (2003) aus zufällig auf der Oberfläche der Verglasung (2001) verteilten Lichtpunkten besteht und eine zufällige Verteilung in Größe und Lichtdichte aufweist.

7. Verfahren nach einem der Ansprüche 5 bis 6, wobei die Verglasung (2001) eine Temperatur aufweist, bei der die Wellenlänge, die dem Maximum ihrer Strahlung entspricht, zwischen 2 µm und 6 µm liegt.

8. Verfahren nach Anspruch 7, wobei die Verglasung (2001) auf Kalk-Natron-Silikat-Mineralglas basiert und die Temperatur der Verglasung zwischen 300 °C und 1000 °C, insbesondere zwischen 400 °C und 650 °C, liegt.

9. Verfahren nach einem der Ansprüche 5 bis 8, wobei die digitalen optischen Vorrichtungen (2004a, 2004b) mit Neutraldichtefiltern ausgestattet sind, wobei die Dichte zwischen 2 und 400, vorzugsweise zwischen 8 und 64, liegt.

10. Verfahren nach einem der Ansprüche 5 bis 9, wobei die Projektion (2002, 3001) des Lichtmusters (2003) und die Erfassung der Bilder in einem Wellenlängenbereich des elektromagnetischen Spektrums zwischen 435 nm und 530 nm, insbesondere zwischen 465 nm und 490 nm, erfolgen.

11. Verfahren nach einem der Ansprüche 5 bis 10, wobei es ferner vor Schritt (a) einen Schritt des Verteilens eines pulverförmigen Materials umfasst und die Projektion (2002, 3001) des zufälligen Lichtmusters (2003) in Schritt (a) durch Beleuchten eines auf der Oberfläche der Verglasung verteilten pulverförmigen Materials mit sichtbarem Licht erfolgt.

12. Verfahren nach Anspruch 11, wobei die Beleuchtung durch Transmission erfolgt.

13. Verfahren nach Anspruch 11, wobei die Beleuchtung durch Reflexion unter einem Projektionswinkel zwischen 35° und 55°, insbesondere zwischen 40° und 50°, vorzugsweise mit einem Projektionswinkel von 45°, bezogen auf eine Normale einer Oberfläche der Verglasung, erfolgt.

14. Verfahren nach einem der Ansprüche 5 bis 8, wobei die Beleuchtung in einem Wellenlängenbereich des elektromagnetischen Spektrums zwischen 435 nm und 530 nm erfolgt.

15. Verfahren nach einem der Ansprüche 5 bis 14, wobei ein absorbierender Hintergrund (2006) des sichtbaren Spektrums hinter der Verglasung auf der den digitalen optischen Vorrichtungen gegenüberliegenden Seite angebracht wird.

16. Verfahren nach einem der Ansprüche 5 bis 15, wobei die Verglasung eine konkav geformte Verglasung ist.

17. System (2000, 3000) zum Durchführen eines Verfahrens nach einem der Ansprüche 5 bis 16, wobei das System umfasst:
- einen Projektor (2002, 3002), der dazu konfiguriert ist, ein zufälliges Lichtmuster (2003) auf eine Verglasung (2001) auf transparenter Mineralglasbasis zu projizieren;
- mindestens zwei digitale optische Vorrichtungen (2004a, 2004b), die entsprechend zwei verschiedenen Aufnahmewinkeln relativ zu einer Normalen (N) zur Oberfläche der Verglasung ausgerichtet sind und für die gleichzeitige und unabhängige Aufnahme von mindestens zwei digitalen Bildern (IM-1, IM-2) des zufälligen Lichtmusters (2003) konfiguriert sind;
- eine Datenverarbeitungseinheit 2005 zum Bestimmen der dreidimensionalen Geometrie einer Verglasung (2001) auf transparenter Mineralglasbasis, wobei die Verarbeitungseinheit (2005) als Eingabedaten (I1001, I1102) ein digitales Referenzmodell (MOD-R) der dreidimensionalen Geometrie der Verglasung und die von den digitalen optischen Vorrichtungen (2004a, 2004b) erfassten digitalen Bilder (IM-1, IM-2) verwendet und als Ausgabedaten (O1001) ein digitales Modell (MOD-R') der dreidimensionalen Geometrie der Verglasung (2001) bereitstellt;
wobei die Datenverarbeitungseinheit Mittel zum Implementieren eines Verfahrens (1000) umfasst, das die folgenden Schritte umfasst:
(a) einen Schritt (S1001) des Verankerns (ANCR) des digitalen Referenzmodells (MOD-R) auf einem der digitalen Bilder (IM-1, IM-2) unter Verwendung von mindestens drei Ankerpunkten;
(b) einen Schritt (S1002) des Berechnens zweier virtueller digitaler Bilder (IM-V1, IM-V2) der Verglasung aus dem digitalen Referenzmodell (MOD-R) entsprechend den gleichen zwei Beobachtungswinkeln wie denen der beiden digitalen Bilder (IM-1, IM-2), die als Eingabedaten (I1002) bereitgestellt werden;
(c) einen Schritt (S1003) des Berechnens der Residuen (C-RES), die den Unterschieden zwischen den in Schritt (b) erhaltenen virtuellen Bildern und den als Eingabedaten (I1002) bereitgestellten digitalen Bildern (IM-1, IM-2) entsprechen;
(d) einen Iterationsschritt (S1004) der Schritte (b) und (c), wobei jede Iteration einen Berechnungsschritt (C-MOD) eines modifizierten digitalen Modells (MOD-R') aus einem vorherigen modifizierten digitalen Modell (MOD-R') umfasst, das als Eingabedaten (D1004) für den Schritt (d) bereitgestellt wurde, um die Werte der Residuen (RES) zu minimieren, bis sie unter einem zuvor definierten Schwellenwert a liegen, wobei das modifizierte digitale Modell (MOD-R') dann den Ausgabedaten (O1001) entspricht.

## Claims

1. A computer-implemented method (1000) for determining the three-dimensional geometry of a transparent glazing based on a mineral glass, said method using, as input data (11001, 11002):
- a digital reference model (MOD-R) of the three-dimensional geometry of the glazing, and
- at least two digital images (IM-1, IM-2) of a random light pattern projected onto the surface of the glazing, said images representing said pattern at two different observation angles relative to a normal to the surface of the glazing;
said method providing, as output data (O1001), a digital model (MOD-R') of the three-dimensional geometry of said glazing;
said method comprising:
(a) a step (S1001) of anchoring (ANCR) the digital reference model (MOD-R) to one of the digital images (IM-1, IM-2) by means of at least three anchoring points;
(b) a step (S1002) of calculating, based on the digital reference model (MOD-R), two virtual digital images (IM-V1, IM-V2) of the glazing at the same two observation angles as those of the two digital images (IM-1, IM-2) provided as input data (11002);
(c) a step (S1003) of calculating the residues (C-RES) corresponding to the differences between the virtual images obtained in step (b) and the digital images (IM-1, IM-2) provided as input data (11002);
(d) a step of iterating (S1004) steps (b) and (c), each iteration comprising a step of calculating (C-MOD) a modified digital model (MOD-R') based on a prior modified digital model (MOD-R') provided as input datum (D1004) for said step (d), so as to minimise the values of the residues (RES) until they are under a previously defined threshold value σ, the modified digital model (MOD-R') then corresponding to the output datum (O1001).

2. The method according to claim 1, such that the light pattern (2003) is formed of light dots randomly distributed on the surface of the glazing (2001) and has a random distribution in terms of size and light density.

3. A computer program comprising instructions which, when the program is executed by a computer, cause said computer to execute the steps of the method according to any one of claims 1 to 2.

4. Computer-readable storage medium comprising instructions which, when they are executed by a computer, cause said computer to execute the steps of the method according to any one of claims 1 to 2.

5. A process (2000, 3000) for measuring the three-dimensional geometry of a transparent glazing (2001) based on mineral glass, said process comprising the following steps:
(a) projecting (2002, 3001) a random light pattern (2003) onto the surface of the glazing (2001);
(b) simultaneously and independently acquiring at least two digital images (IM-1, IM-2) of said pattern (2003) by two digital optical devices (2004a, 2004b) oriented at two different acquisition angles relative to a normal (N) of the glazing (2001);
(c) determining the three-dimensional geometry of the glazing (2001) using a method, implemented by computer (2005), for determining the three-dimensional geometry of a transparent glazing (2001) based on a mineral glass according to any one of claims 1 to 2, and wherein the digital images acquired (IM-1, IM-2) in step (b) are provided as input data (11001, I1002).

6. The process according to claim 5, such that the light pattern (2003) is formed of light dots randomly distributed on the surface of the glazing (2001) and has a random distribution in terms of size and light density.

7. The process according to any one of claims 5 to 6, such that the glazing (2001) has a temperature such that the wavelength corresponding to the maximum radiance thereof is between 2 µm and 6 µm.

8. The process according to claim 7, such that the glazing (2001) is based on soda-lime-silica glass and the temperature of the glazing is between 300 °C and 1000 °C, in particular between 400 °C and 650 °C.

9. The process according to any one of claims 5 to 8, such that the digital optical devices (2004a, 2004b) are provided with neutral-density filters, the density being between 2 and 400, preferably between 8 and 64.

10. The process according to any one of claims 5 to 9, such that the projection (2002, 3001) of the light pattern (2003) and the acquisition of the images are carried out in a wavelength range of the electromagnetic spectrum of between 435 nm and 530 nm, in particular between 465 nm and 490 nm.

11. The process according to any one of claims 5 to 10, such that it further comprises, before step (a), a step of dispersing a pulverulent material, and the projection (2002, 3001) of the random light pattern (2003) in step (a) is carried out by illuminating, with visible light, a pulverulent material dispersed on the surface of the glazing.

12. The process according to claim 11, such that the illumination is carried out in transmission.

13. The process according to claim 11, such that the illumination is carried out in reflection at a projection angle of between 35° and 55°, in particular between 40° and 50°, preferably at a projection angle of 45°, relative to a normal to a surface of the glazing.

14. The process according to any one of claims 5 to 8, such that the illumination is carried out in a wavelength range of the electromagnetic spectrum of between 435 nm and 530 nm.

15. The process according to any one of claims 5 to 14, such that a background (2006) which absorbs the visible spectrum is placed behind the glazing on the side opposite to that of digital optical devices.

16. The process according to any one of claims 5 to 15, such that the glazing is a curved glazing.

17. A system (2000, 3000) for implementing a process according to any one of claims 5 to 16, said system comprising:
- a projector (2002, 3002) configured to project a random light pattern (2003) onto a glazing (2001) based on transparent mineral glass;
- at least two digital optical devices (2004a, 2004b) oriented at two different acquisition angles relative to a normal (N) to the surface of the glazing, configured for the simultaneous and independent acquisition of at least two digital images (IM-1, IM-2) of the random light pattern (2003);
- a data processing unit 2005 for determining the three-dimensional geometry of a glazing (2001) based on a transparent mineral glass, said processing unit (2005) using, as input data (11001, I1102), a digital reference model (MOD-R) of the three-dimensional geometry of the glazing, and the digital images (IM-1, IM-2) acquired by the digital optical devices (2004a, 2004b), and providing, as output datum (O1001), a digital model (MOD-R') of the three-dimensional geometry of the glazing (2001);
said data processing unit comprising means for implementing a method (1000) comprising the following steps:
(a) a step (S1001) of anchoring (ANCR) the digital reference model MOD-R to one of the digital images (IM-1, IM-2) by means of at least three anchoring points;
(b) a step (S1002) of calculating, based on the digital reference model MOD-R, two virtual digital images (IM-V1, IM-V2) of the glazing at the same two observation angles as those of the two digital images (IM-1, IM-2) provided as input data (11002);
(c) a step (S1003) of calculating the residues (C-RES) corresponding to the differences between the virtual images obtained in step (b) and the digital images (IM-1, IM-2) provided as input data (11002);
(d) a step of iterating (S1004) steps (b) and (c), each iteration comprising a step of calculating (C-MOD) a modified digital model (MOD-R') based on a prior modified digital model (MOD-R') provided as input datum (D1004) for said step (d), so as to minimise the values of the residues (RES) until they are under a previously defined threshold value σ, the modified digital model (MOD-R') then corresponding to the output datum (O1001).
